# EUROPÄISCHE PATENTANMELDUNG

(11) **EP 0 556 717 A1**
(43) Veröffentlichungstag der Anmeldung: **25.08.1993**
(21) Anmeldenummer: 93102129.9
(22) Anmeldetag: 11.02.1993
(51) Int. Cl.: B01D 53/36, B01D 53/34, A61K 37/02, C07K 5/00, G01N 33/576, C07K 7/10

(54) **Entfernung von Fluor oder anorganischen Fluorverbindungen aus Gasen unter Verwendung von gebrauchten Titandioxidkatalysatoren**

(30) Priorität: 14.02.1992 DE 4212451
(71) Anmelder: HÜLS AKTIENGESELLSCHAFT, D-45764 Marl (DE)
(72) Erfinder: Jung, Jürgen, Dr., W-4270 Dorsten (DE); Kretschmer, Helmut, Dr., W-4358 Haltern (DE)

(57) **Zusammenfassung**

Die Erfindung betrifft ein Verfahren zur Entfernung von Fluor und/oder anorganischen Fluorverbindungen aus Gasen, wobei die Fluor und/oder anorganische Fluorverbindungen enthaltenden Gase über ein Adsorbens und/oder einen Katalysator auf Basis von Titandioxid geleitet werden. Hierbei wird als Adsorbens und/oder Katalysator ein gebrauchter Katalysator auf Basis von Titandioxid eingesetzt.

Außerdem betrifft die Erfindung die Verwendung von gebrauchten Katalysatoren auf Basis von Titandioxid zur Entfernung von Fluor und/oder anorganischen Fluorverbindungen aus Gasen.

## Beschreibung

Die Erfindung betrifft ein Verfahren zur Entfernung von Fluor und/oder anorganischen Fluorverbindungen aus Gasen, wobei die Fluor und/oder anorganische Fluorverbindungen enthaltenden Gase über ein Adsorbens und/oder einen Katalysator auf Basis von Titandioxid geleitet werden.

Des weiteren betrifft die Erfindung die Verwendung von gebrauchten Katalysatoren auf Basis von Titandioxid zur Entfernung von Fluor und/oder anorganischen Fluorverbindungen aus Gasen.

Fluor und/oder anorganische Fluorverbindungen, die in den Abgasen von Einrichtungen vorkommen, die zur Fluorierung von Kunststoffoberflächen, zur Materialanalyse nach dem Fluorverbrennungsverfahren, zur Halbleiterherstellung, zur Behandlung von Kernbrennstoffen oder die für chemische Synthesen im Labor und Betrieb verwendet werden, oder die in Abgasen industrieller Verbrennungsprozesse sowie industrieller Glasschmelzen vorkommen, sind bekanntlich hochgiftig und dürfen nur im Spurenbereich emittiert werden. Ihre Beseitigung erfordert effektive Methoden, die auch bei geringen Konzentrationen an Fluor und/oder anorganischen Fluorverbindungen hohe Umsätze gewährleisten.

Aus EP-A 0 431 351 ist ein Verfahren zur Entfernung von Fluor und/oder anorganischen Fluoriden aus Gasen bekannt, wobei man das zu reinigende Gasgemisch, welches Fluor und/oder anorganische Fluoride enthält, mit einer Adsorbens- und/oder Katalysator-Masse kontaktiert, die Titandioxid als Hauptbestandteil enthält.

Bereits bei Raumtemperatur lassen sich Fluor und/oder anorganische Fluorverbindungen, die in Gasen zu 0,001 - 100 Vol.-%, gerechnet als Fluor, enthalten sind, vollständig an TiO₂-Kontaktmassen bei Kontaktzeiten von > 0,1 sek. adsorbieren. Fluor bzw. die Fluoratome in den Verbindungen reagieren mit dem am TiO₂ sorbierten Wasser und mit den am Titan gebundenen Hydroxidgruppen unter Bildung von Wasser bzw. unter Bildung von Fluorwasserstoff.

Außerdem können die mit Fluor und/oder anorganischen Fluorverbindungen beladenen TiO₂-haltigen Massen regeneriert werden. Enthalten die anorganischen Fluorverbindungen Elemente, die nichtflüchtige Oxide bilden, wie z. B. WF₆ oder SiF₄, so ist nur eine Teilregeneration des Adsorbens oder Katalysators unter Freisetzung von Fluorwasserstoff möglich.

Die Regenerierung der beladenen TiO₂-haltigen Massen kann durch Hydrolyse der sorbierten Fluorverbindungen bei Temperaturen von 250 bis 600 °C unter Zuführen von Wasser bzw. Wasserdampf erfolgen.

Mit Hilfe von TiO₂-haltigen Massen lassen sich aus Gasen anorganische Fluorverbindungen entfernen, die u. a. die Elemente Wasserstoff, Kohlenstoff, Stickstoff, Sauerstoff, Schwefel, Chlor, Brom, Jod, Wolfram, Phosphor, Silizium, Germanium, Arsen, Selen, Xenon, Krypton, Antimon, Tellur, Vanadium, Chrom, Molybdän, Rhenium und Uran enthalten.

Titandioxid für Adsorbens- oder Katalysatormassen ist ein relativ teures Material, welches in der Regel aus Ilmenit oder Rutilsanden nach aufwendigen Aufbereitungsverfahren hergestellt wird. Zu nennen sind das Sulfat- und das Chloridverfahren.

Das ältere Sulfatverfahren beruht auf dem Aufschluß von Titan-Rohstoffen mit hochprozentiger Schwefelsäure. Aus der Sulfat-Lösung wird ein relativ reines Titandioxidhydrat durch Hydrolyse gefällt. Das Hydrat wird nach der Reinigung geglüht, gemahlen und gegebenenfalls nachbehandelt.

Beim Chlorid-Verfahren werden die Titan-Rohstoffe bei Temperaturen von 700 bis 1 200 °C in Gegenwart von Kohlenstoff chloriert. Durch Destillation kann TiCl₄ von den anderen Chloriden getrennt werden, und bei Temperaturen von 900 bis 1 400 °C wird es zu TiO₂ verbrannt.

Diese relativ teuren TiO₂-Massen verursachen bei ihrer Herstellung Abfallprodukte, die Probleme bei der Entsorgung bereiten, z. B. die sogenannte "Dünnsäure".

Der Erfindung liegt die Aufgabe zugrunde, ein wirtschaftlicheres Verfahren zur Entfernung von Fluor und/oder anorganischen Fluorverbindungen aus Gasen zu entwickeln, wobei preiswertere Adsorbentien und/oder Katalysatoren auf Basis von Titandioxid verwendet werden sollen.

Überraschendeweise wurde nun gefunden, daß gebrauchte Katalysatoren auf Basis von Titandioxid zur Entfernung von Fluor und/oder anorganischen Fluorverbindungen aus Gasen genauso gut geeignet sind wie frisch hergestellte TiO₂-haltige Materialien.

Gegenstand der vorliegenden Erfindung ist daher ein Verfahren zur Entfernung von Fluor und/oder anorganischen Fluorverbindungen aus Gasen, wobei die Fluor und/oder anorganische Fluorverbindungen enthaltenden Gase über ein Adsorbens und/oder einen Katalysator auf Basis von Titandioxid geleitet werden, das dadurch gekennzeichnet ist, daß als Adsorbens und/oder Katalysator ein gebrauchter Katalysator auf Basis von Titandioxid eingesetzt wird.

Des weiteren ist Gegenstand der vorliegenden Erfindung die Verwendung von gebrauchten Katalysatoren auf Basis von Titandioxid zur Entfernung von Fluor und/oder anorganischen Fluorverbindungen aus Gasen.

Die gebrauchten Katalysatoren auf Basis von Titandioxid sind vorher zur Entfernung von Stickoxiden aus Abgasen, zur Entfernung von Schwefelverbindungen aus Abgasen, z. B. im Claus-Prozeß, sowie zur katalytischen Oxidation von Kohlenwasserstoffen und/oder Kohlenmonoxid eingesetzt worden.

Die Katalysatoren aus den obengenannten Prozessen werden bei Nachlassen ihrer Aktivität ausgetauscht und in der Regel verworfen.

Bevorzugt eignet sich das erfindungsgemäße Verfahren sowie die erfindungsgemäße Verwendung von gebrauchten Katalysatoren auf Basis von Titandioxid zur Entfernung von Fluor und/oder anorganischen Fluorverbindungen aus Abgasen.

Die mit der vorliegenden Erfindung erzielbaren Vorteile bestehen insbesondere darin, gebrauchte Katalysatoren wieder sinnvoll einem Gasreinigungsprozeß zur Entfernung von Fluor und/oder anorganischen Fluorverbindungen zuzuführen. Durch die Wiederverwendung der gebrauchten Katalysatoren werden Entsorgungskosten gespart, und die Umwelt wird sowohl im Falle der Deponie der gebrauchten Katalysatoren als auch bei der Herstellung neuer Katalysatormassen geschont. Die gebrauchten Katalysatoren können außer Titandioxid noch als weitere katalytisch aktive Komponenten Vanadin und/oder Wolfram und/oder Molybdän und/oder Eisen und/oder Nickel und/oder Kobalt und/oder Kupfer und/oder Chrom und/oder Zirkonium elementar oder in Form ihrer Verbindungen enthalten.

Die gebrauchten Katalysatoren auf Basis von Titandioxid können in Form von Wabenkörpern, Strangextrudaten, Pellets, Tabletten, Kugeln, Splitt oder Pulver erfindungsgemäß verwendet werden.

## Patentansprüche

1. Verfahren zur Entfernung von Fluor und/oder anorganischen Fluorverbindungen aus Gasen, wobei die Fluor und/oder anorganische Fluorverbindungen enthaltenden Gase Ober ein Adsorbens und/oder einen Katalysator auf Basis von Titandioxid geleitet werden,
dadurch gekennzeichnet,
daß als Adsorbens und/oder Katalysator ein gebrauchter Katalysator auf Basis von Titandioxid eingesetzt wird.

2. Verfahren nach Anspruch 1,
dadurch gekennzeichnet,
daß der gebrauchte Katalysator auf Basis von Titandioxid vorher zur Entfernung von Stickoxiden aus Abgasen eingesetzt worden ist.

3. Verfahren nach Anspruch 1,
dadurch gekennzeichnet,
daß der gebrauchte Katalysator auf Basis von Titandioxid vorher zur Entfernung von Schwefelverbindungen aus Abgasen eingesetzt worden ist.

4. Verfahren nach Anspruch 1,
dadurch gekennzeichnet,
daß der gebrauchte Katalysator auf Basis von Titandioxid vorher zur katalytischen Oxidation von Kohlenwasserstoffen und/oder Kohlenmonoxid eingesetzt worden ist.

5. Verfahren nach den Ansprüchen 1 bis 4,
dadurch gekennzeichnet,
daß die Fluor und/oder anorganische Fluorverbindungen enthaltenden Gase Abgase sind.

6. Verwendung von gebrauchten Katalysatoren auf Basis von Titandioxid zur Entfernung von Fluor und/oder anorganischen Fluorverbindungen aus Gasen.

7. Verwendung nach Anspruch 6,
dadurch gekennzeichnet,
daß die gebrauchten Katalysatoren vorher zur Entfernung von Stickoxiden aus Abgasen eingesetzt worden sind.

8. Verwendung nach Anspruch 6,
dadurch gekennzeichnet,
daß die gebrauchten Katalysatoren vorher zur Entfernung von Schwefelverbindungen aus Abgasen eingesetzt worden sind.

9. Verwendung nach Anspruch 6,
dadurch gekennzeichnet,
daß die gebrauchten Katalysatoren vorher zur katalytischen Oxidation von Kohlenwasserstoffen und/oder Kohlenmonoxid eingesetzt worden sind.

10. Verwendung nach den Ansprüchen 6 bis 9,
dadurch gekennzeichnet,
daß die Fluor und/oder anorganische Fluorverbindungen enthaltenden Gase Abgase sind.
